# EUROPEAN PATENT APPLICATION

(11) **EP 4 672 275 A1**
(43) Date of publication of application: **31.12.2025**
(21) Application number: 24185382.9
(22) Date of filing: 28.06.2024
(51) Int. Cl.: H01B 3/44, C08L 23/12

(54) **POWER CABLE COMPRISING A THERMOPLASTIC INSULATION LAYER**

(71) Applicant: NKT HV Cables AB, 371 60 Lyckeby (SE)
(72) Inventor: POURRAHIMI, Amir Masoud, Västerås (SE)
(74) Representative: Kransell & Wennborg KB

(57) **Abstract**

There is provided a power cable (1) comprising:
- a conductor (2) extending along a centre axis (C);
- an insulation system (5) including at least a first semiconducting layer (3) surrounding the conductor (2), and an insulation layer (4) surrounding the first semiconducting layer (3);

wherein the insulation layer (4) is not crosslinked and comprises:
a) 3-25 wt% ultra-high molecular weight polyethylene, UHMWPE, having a Mw of at least 1 000 000 g/mol;
b) 50-90 wt% polypropylene, PP; and
c) 5-20 wt% styrene block copolymer

wherein the weight percentages are based on the insulation layer (4) as a whole.

## Description

### TECHNICAL FIELD

The present disclosure generally relates to power cables.

### BACKGROUND

A typical power cable for medium and high voltage applications comprises a conductor surrounded by at least an inner semiconductive layer, an insulation layer and optionally an outer semiconductive layer, in that order. The power cables are typically produced by extruding the layers onto the conductor.

The polymer material in one or more of the layers of the power cable may be thermosetting, typically crosslinked, to improve e.g. heat and deformation resistance, creep properties, mechanical strength, chemical resistance and abrasion resistance. However, crosslinking the polymer material is associated with several drawbacks, e.g. the need for degassing volatile compounds during the production of the power cable and difficulties in recycling the power cable.

Thermoplastic polymer material offers several advantages compared to a thermosetting polymer material, such as omitted degassing step and increased recyclability. However, the absence of a crosslinked material can lead to impaired material properties of the power cable.

Moreover, some thermoplastic polymer material may exhibit proper, or even improved, material properties in a first range of temperatures as compared to a crosslinked material, but deteriorated material properties in a second range of temperatures.

Thus, there is a need for power cables comprising polyolefin compositions which avoid the disadvantages associated with crosslinked material, but which also offer attractive material properties.

### SUMMARY

A general object of the present disclosure is to provide a power cable that solves or at least mitigates the problems of the prior art.

According to a first aspect of the present disclosure, there is provided a power cable comprising:
- a conductor extending along a centre axis;
- an insulation system including at least a first semiconducting layer surrounding the conductor, and an insulation layer surrounding the first semiconducting layer;
wherein the insulation layer is not crosslinked and comprises:
a) 3-25 wt% ultra-high molecular weight polyethylene, UHMWPE, having a Mw of at least 1 000 000 g/mol;
b) 50-90 wt% polypropylene, PP; and
c) 5-20 wt% styrene block copolymer
wherein the weight percentages are based on the insulation layer (4) as a whole.

Hereby, an advantageous insulation layer is provided. Thus, an improved power cable is provided. Owing to the polymer composition, an insulation layer with well-balanced material properties is provided. For example, the insulation layer according to the first aspect exhibits a combination of an advantageously low storage modulus at low temperatures (typically at 30 °C) and an advantageously high storage modulus at high temperatures (typically 120 °C). Thus, a well-balanced combination of flexibility at lower temperatures and creep resistance at higher temperature is provided. Moreover, at an even higher temperature (about 140-155 °C) there is also an advantageously high creep resistance.

Storage modulus is a measure of the stored energy in a material during deformation, representing the elastic, or recoverable, portion of the material's response in dynamic mechanical analysis, DMA. It reflects the material's ability to store energy and return to its original shape after deformation. The storage modulus is a dynamic property specific to viscoelastic materials, e.g. the insulation layer of the present disclosure, and is measured under dynamic, oscillatory, conditions, wherein it is dependent on the frequency of the applied load. The storage modulus indicates how much energy is stored in the material and is recoverable during each deformation cycle.

The insulation layer is not crosslinked. Accordingly, the insulation layer is thermoplastic, i.e. is formed of a thermoplastic composition. It should be noted that any layer of the power cable, such as e.g. the inner semiconductive layer, may additionally be thermoplastic. The first semiconducting layer typically comprises an electrically conductive compound, such as e.g. carbon black. According to one embodiment,.

According to one embodiment, the whole insulation system is thermoplastic and is not crosslinked. Hereby, not only the insulation layer, but also the whole insulation layer is not crosslinked and may benefit from associated advantages (e.g. no degassing during the production of the insulation layer or insulation system, increased recyclability etcetera). Accordingly, the insulation system does not comprise peroxide, or crosslinking residues.

The UHMWPE preferably has a Mw of 1500 000 - 8 000 000 g/mol.

According to one embodiment, based on the weight of the insulation layer, the insulation layer comprises:
a) 3-25 wt%, such as 4-20 wt%, such as 7-19 wt%, UHMWPE;
b) 60-90 wt%, such as 70-85 wt% PP, such as 70-80 wt% PP; and
c) 5-20 wt%, such as 5-15 wt%, such as 8-15 wt%, styrene block copolymer.

Hereby, the above mentioned well-balanced material properties related to the storage modulus/creep resistance may be further improved.

In a particularly preferred embodiment providing for an advantageously high storage modulus at a temperature of about 140-155 °C the insulation layer comprises:
a) 7-19 wt%, UHMWPE;
b) 70-85 wt% PP; and
c) 8-15 wt% styrene block copolymer.

According to one embodiment, the UHMWPE, PP and styrene block copolymer constitutes at least 90 wt% of the insulation layer, such as at least 95 wt% of the insulation layer, such as at least 97 wt% of the insulation layer, based on the weight of the insulation layer.

According to one embodiment, the insulation layer, or the composition used for obtaining the insulation layer, comprises at most 3 wt% of one or more additives, such as antioxidant(s), stabilizer(s), processing aid(s), inorganic filler(s), the weight percentage being based on the insulation as a whole, or based on the composition as a whole.

According to one embodiment, the styrene block copolymer is selected from the group consisting of SEBS, SEPS, SBS and SIS. For example, SEBS being Styrene-Ethylene-Butylene-Styrene, may be poly[styrene-b-(ethylene-co-butylene)-b-styrene], SEPS being Styrene-Ethylene-Propylene-Styrene, may be poly[styrene-b-(ethylene-co- propylene)-b-styrene], SBS being Styrene-Butadiene-Styrene, may be poly[styrene-b-(butadiene)-b-styrene] and SIS being Styrene-Isoprene-Styrene, may be poly[styrene-b-(isoprene)-b-styrene]. For example, the styrene block copolymer may be a mixture of at least any two of SEBS, SEPS, SBS and SIS.

The styrene block copolymer may have a styrene content of 10 to 40 wt%, preferably between 13 and 35 wt%. Thus, the styrene content of the styrene block copolymer may be equal to or below 40 wt%, preferably of equal to or below 35 wt%, and may be equal to or above 10 wt%, preferably equal or to above 13 wt%. Such styrene content is beneficial for provision of a high creep resistance.

The styrene block copolymer may have a density of between 900 kg/m³ and 1200 kg/m³, preferably between 950 kg/m³ and 1150 kg/m³. Density is measured according to ISO 1183-1:2019.

The styrene block copolymer may have a specific gravity of between 0.80-1.20 g/cm³, preferably between 0.85-1.10 g/cm³. Specific gravity is measured according to ASTM D2240.

The styrene block copolymer may have a melt flow index of 1-25 g/10 min tested at 230°C and 2.16 kg. Melt flow index is measured according to ASTM D1238.

The styrene block copolymer may be prepared by any suitable known method in the art or can be obtained commercially.

According to one embodiment, the polypropylene is a propylene copolymer, preferably a propylene random copolymer and/or is a homophasic polypropylene or is a heterophasic polypropylene or an isotactic polypropylene. For example, the polypropylene is a random heterophasic polypropylene copolymer. Preferably, the polypropylene is not a homopolymer.

According to one particularly preferred embodiment the insulation layer comprises: a) 60 to 90 wt% polypropylene; b) 5 to 20 wt% styrene block copolymer; and c) 7 to 19 UHMWPE; wherein the weight percentages are based on the insulation layer as a whole. In such embodiment, the well-balanced material properties related to the storage modulus and creep resistance are particularly beneficial overall over a temperature range from 30-155 °C.

According to one embodiment, the power cable is a medium voltage or high voltage power cable.

According to one embodiment, the insulation layer is an extruded, such as co-extruded, insulation layer. For example, the insulation layer may have been extruded onto the first semiconducting layer. Alternatively, the insulation layer may have been co-extruded together with the first semiconducting layer.

According to one embodiment, the insulation layer has a storage modulus of between 650 and 750 MPa when measured at 30 °C, such as between 660 and 740 MPa, such as between 660 and 700 MPa, using the DMA Storage modulus method as defined herein. Thus, the insulation layer may exhibit an advantageously low storage modulus ("flexibility") at low temperatures (at 30 °C).

According to one embodiment, the insulation layer has a storage modulus of between 70 and 150 MPa when measured at 120 °C, such as between 75 and 120 MPa, such as between 80 and 110 MPa, using the DMA Storage modulus method as defined herein. Thus, the insulation layer may exhibit an advantageously high storage modulus at high temperatures (at about 120 °C as well as 140-155 °C). Typically, high storage modulus result in high creep-resistance.

Typically, the insulation layer has a storage modulus of between 650 and 750 MPa when measured at 30 °C, such as between 660 and 740 MPa, such as between 660 and 700 MPa, and a storage modulus of between 70 and 150 MPa when measured at 120 °C, such as between 75 and 120 MPa, such as between 80 and 110 MPa, using the DMA Storage modulus method as defined herein. Thus, the insulation layer may exhibit a combination of an advantageously low storage modulus at low temperatures (at 30 °C) and an advantageously high storage modulus at high temperatures (at 120 °C). Thus, a well-balanced combination desirable storage modulus at low and high temperature is provided.

According to one embodiment, the power cable further comprises a second semiconducting layer. For example, the first semiconducting layer may be an inner semiconducting layer arranged in direct contact with, and radially inside of, the insulation layer, and the second semiconducting layer may be an outer semiconducting layer arranged radially outside of the insulation layer.

According to one embodiment, the second semiconducting layer is comprised in the insulation system. The second semiconducting layer may be arranged in direct contact with, and radially outside of, the insulation layer. The second semiconducting layer may form an insulation screen. The first semiconducting layer may form a semiconducting conductor shield. The first semiconducting layer may be arranged closest to the conductor (i.e. closest with regards to the insulation system).

According to a second aspect of the present disclosure, there is provided a process for producing a power cable comprising the steps of:
- providing a conductor;
- applying an insulation system surrounding the conductor, wherein the insulation system includes at least a first semiconducting layer and an insulation layer surrounding the first semiconducting layer;
wherein the insulation layer is not crosslinked and comprises:
a) 3-25 wt% ultra-high molecular weight polyethylene, UHMWPE, having a Mw of at least 1 000 000 g/mol;
b) 50-90 wt% polypropylene, PP; and
c) 5-20 wt% styrene block copolymer
wherein the weight percentages are based on the insulation layer as a whole.

According to one embodiment, the insulation system is applied by extrusion, such as co-extrusion. For example, the insulation layer may be extruded onto the first semiconducting layer. Alternatively, the insulation layer may be co-extruded together with the first semiconducting layer.

According to one embodiment, the extruded insulation layer has been produced by compounding and subsequent extrusion. Thus, the insulation layer may have been obtained from a composition comprising:
a) 3-25 wt% ultra-high molecular weight polyethylene, UHMWPE, having a Mw of at least 1 000 000 g/mol;
b) 50-90 wt% polypropylene, PP; and
c) 5-20 wt% styrene block copolymer
wherein the weight percentages are based on the insulation layer as a whole.

According to one embodiment, the PP and the styrene block copolymer have been premixed prior to the compounding.. The UHMWPE can subsequently be added and mixed into the PP/styrene block copolymer mixture.

According to one embodiment, the PP, the styrene block copolymer and the UWMWPE are added individually to a compounding step.

The examples and embodiments discussed above in connection to the first aspect apply to the second aspect *mutatis mutandis.*

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig. 1 schematically shows a radial cross section of a power cable of an example embodiment;
Fig. 2 schematically shows a side view of at least a part of the power cable of Fig. 1; and
Fig. 3 is a flow-chart showing the steps of a process for producing a power cable according to at least some example embodiments;
Fig. 4 is a graph showing the Dynamic Mechanical Analysis (DMA) storage modulus (E') plotted on a logarithmic scale against temperature for various comparative and inventive example samples; and
Fig. 5 is a graph showing the Dynamic Mechanical Analysis (DMA) storage modulus plotted on a linear scale against temperature for various comparative and inventive example samples.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

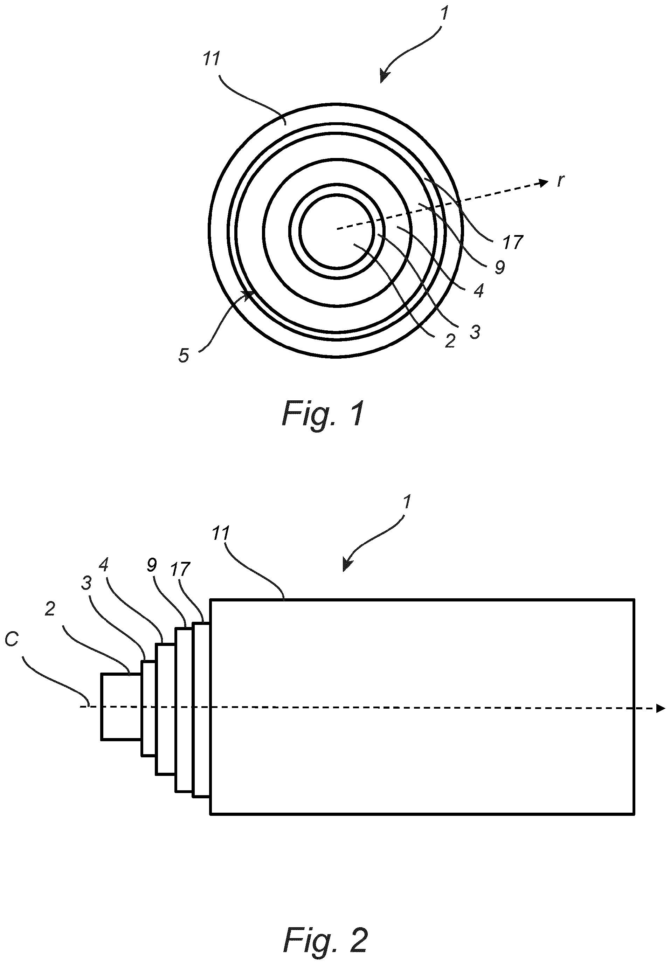

Figs. 1 and 2 show an example of a power cable 1. The power cable 1 is in this example a single power core power cable. However, it should be mentioned that the power cable could comprise several identical power cores to form a multi-core power cable, such as three-phase power cable. The power cable 1 may be a HVDC power cable or a HVAC power cable, for example for voltages higher than 35 kV, or higher than 110 kV, or higher than 450 kV, or higher than 550 kV, or higher than 800 kV. The power cable 1 may alternative be a medium power cable (DC or AC), for example for voltages between 5 kV and 35 kV. However, according to one alternative embodiment, the power cable 1 is a medium power cable (or high voltage cable in the medium voltage span) for voltages between 1 kV and 35 kV.

In Fig. 1, a radial cross section of an embodiment of a power cable 1 is shown. The radial cross section is a cross section in the radial direction r of the power cable 1, i.e. a plane perpendicular to a centre axis of the power cable 1 (extending into the paper). The power cable 1 may e.g. be defined by cylindrical coordinates (by a radial distance r, azimuth φ which is the angle along the circumferential direction, and an axial coordinated along the longitudinal axis).

In Fig. 2, a side view of the power cable 1 of Fig. 1, in which the power cable 1 extends along the centre axis C (or centre longitudinal axis).

In the following, the power cable 1 will be described with reference to both Figs. 1 and 2. The power cable 1 comprises a conductor 2 extending along the centre axis C. The conductor 2 may for example be stranded, segmental of Milliken type, solid, or a profile wire conductor. The conductor 2 may for example comprise copper or aluminum.

The power cable 1 further comprises an insulation system 5 provided around, and covering, the conductor 2. The insulation system 5 comprises a first semiconducting layer 3 provided around the conductor 2, an insulation layer 4 provided around the first semiconducting layer 3, and optionally, a second semiconducting layer 9 provided around the insulation layer 4.

In the embodiment of Figs. 1 and 2, the insulation layer 4 is arranged to be in direct contact with, and radially outside of the first semiconducting layer 3. Moreover, the optional second semiconducting layer 9 is arranged to be in direct contact with, and radially outside of, the insulation layer 4. Thus, the first semiconducting layer 3 may form a semiconducting conductor shield and be referred to as an inner semiconducting layer. The optional second semiconducting layer 9 may form an insulation screen and be referred to as an outer semiconducting layer.

In the embodiment of Figs. 1 and 2, the power cable 1 further comprises a water barrier structure 17 surrounding the insulation system 5. Thus, in the embodiment of Fig. 1, the water barrier structure 17 is in direct contact with the insulation system 5. In the example, the water barrier structure 17 is arranged in direct contact with, and radially outside of, the optional second semiconducting layer 9. The water barrier structure 17 is typically arranged to prevent, or at least greatly reduce, water penetrating into the insulation system 5 from the outside. The water barrier structure may e.g. exhibit a water permeability of below 0.1 g / (m²*24 h) or below 0.05 g / (m²*24 h). The water barrier structure may e.g. be a tape wrapped around the insulation system 5, and/or may comprise a metallic foil.

The power cable 1 may furthermore comprise a polymeric jacket 11 provided around the insulation system 5. In the embodiment of Figs. 1 and 2, the polymeric jacket is arranged in direct contact with, and radially outside of, the water barrier structure 17. Thus, the water barrier structure 17 is arranged in between the insulation system 5 and the polymeric jacket 11. However it should be noted that the polymeric jacket 11 may be arranged in direct contact with, and radially outside of, the insulation system 5, in case the water barrier structure 17 is omitted.

The polymeric jacket 11 may e.g. comprise a polymeric material that is extruded around the water barrier structure 17 and/or the insulation system 5. The polymeric jacket 11 of the embodiment of Figs. 1 and may be wholly or partly water impermeable.

The insulation system 5 may be extruded and comprise thermosetting and/or thermoplastic polymer material. For example, the layers 3, 4, 9 of the insulation system 5 may be different in the aspect of being made of thermosetting and thermoplastic polymer material. However, at least the insulation layer 4 is made of thermoplastic polymer material and is hence not crosslinked. Thus, the insulation layer 4 typically does not comprise peroxide or other crosslinking agents or crosslinking residues. Typically, the insulations system 5 is not crosslinked. The first semiconducting layer 3, and the optional second semiconducting layer 9, typically comprises an electrically conductive compound, e.g. carbon black.

The insulation layer 4 comprises a) ultra-high molecular weight polyethylene, UHMWPE having a Mw of at least 1 000 000 g/mol, b) polypropylene, PP, and c) styrene block copolymer. The insulation layer may further comprise d) one or more additives. The one or more additives may include antioxidant(s), stabilizer(s), processing aid(s), and inorganic filler(s). According to one embodiment, the insulation layer 4 consists of a) ultra-high molecular weight polyethylene b) polypropylene and c) styrene block copolymer and optionally e) one or more additives.

For example, the insulation layer 4 comprises a) 3-25 wt% UHMWPE, b) 50-90 wt% PP, and 5-20 wt% styrene block copolymer, optionally together with 0 to 3 wt% of one or more additives. The weight percentages are based on the insulation layer 4. For example, the insulation layer 4 comprises a) 3-25 wt%, such as 4-20 wt%, such as 7-19 wt%, UHMWPE; b) 60-90 wt%, such as 70-85 wt% PP, such as 70-80 wt% PP; and c) 5-20 wt%, such as 5-15 wt%, such as 8-15 wt%, styrene block copolymer, optionally together with 0 to 3 wt% of one or more additives.

However, according to another example, the UHMWPE has a Mw of 1500 000 - 8 000 000 g/mol, such as between 3 000 000 g/mol and 6 000 000 g/mol.

The polypropylene in the examples above is typically a propylene copolymer, preferably a propylene random copolymer and/or is a homophasic polypropylene or is a heterophasic polypropylene or isotactic polypropylene. Additionally or alternatively, the styrene block copolymer is selected from the group consisting of SEBS, SEPS, SBS and SIS or mixtures thereof.

According to one embodiment, the polypropylene is a propylene copolymer and the styrene block copolymer is SEBS.

As will be shown in the examples later, but which is briefly mentioned here, the insulation layer 4 has advantageous material properties, such as a well-balanced combination of flexibility and creep resistance. For example, the insulation layer exhibit a storage modulus of between 650 and 750 MPa when measured at 30 °C, such as between 660 and 740 MPa, such as between 660 and 700 MPa, and a storage modulus of between 70 and 150 MPa when measured at 120 °C, such as between 75 and 120 MPa, such as between 80 and 110 MPa, using the DMA Storage modulus method as defined herein.

The insulation layer 4 is, as previously mentioned, preferably an extruded insulation layer, i.e. has been produced by extrusion, such as co-extrusion. Preferably, the extruded insulation layer has been produced by compounding, preferably by premixing the polypropylene and the styrene block copolymer prior to the compounding.

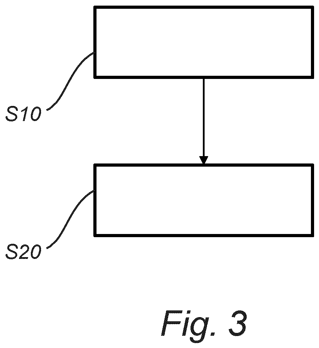

Fig. 3 is a flow-chart describing a process for producing a power cable according to at least some examples. The power cable is that of Figs. 1 and 2. Thus, in the following, reference is made to power cable 1.

In a first step S10, a conductor 2 is provided. The conductor 2 may for example be stranded, segmental of Milliken type, solid, or a profile wire conductor, and/or comprise copper or aluminum.

In a second step S20, being subsequent to the first step S10, an insulation system 5 is applied to surround the conductor 2. The insulation system includes at least a first semiconducting layer 3 and an insulation layer 4 surrounding the first semiconducting layer 3. The insulation system 5 may e.g. be applied to surround the conductor 2 by extrusion, or co-extrusion. For example, at least two of the layers of the insulation system 5 is co-extruded onto the conductor 2.

As previously mentioned, the insulation layer may be a non-crosslinked layer comprising 3-25 wt% UHMWPE, 50-90 wt% PP, and 5-20 styrene block copolymer.

### EXAMPLES

In the following, various samples were prepared and analyzed by specific material parameters. Each sample corresponds to the previously described insulation layer.

### Preparation of samples

A poly-compound (PC) formulation comprising 84.7 wt% PP copolymer (Moplen RP210G from LyondellBasell), 15 wt% styrene block copolymer (SBC) (TC6GPN from Kraiburg) and 0.3 wt% antioxidant (0.2 wt% Irganox 1035 and 0.1 wt% Irganox 802, both from BASF) was mixed with UHMWPE (429015 from Sigma-Aldrich) with an average Mw of 3 000 000-6 000 000 g/mol. A sample containing only PC, a sample containing only UHMWPE and a sample containing only cross-linked polyethylene (XLPE) were also prepared. The samples were produced by melt compounding at 180 °C, 50 rpm for 6 minutes, using a microcompounder (HAAKE^{™} MiniCTW Micro-Conical Twin Screw Compounder).

The various samples are summarized in Table 1 below.

**Table 1. Compositions of the various samples.**

| | CE1 | CE2 | CE3 | IE1 | IE2 | CE4 |
|---|---|---|---|---|---|---|
| | PC | UHMWPE | XLPE | UHMWPE:PC (5:95) | UHMWPE:PC (10:90) | UHMWPE:PC (30:70) |
| PC wt% | 100 | | | 95 | 90 | 70 |
| UHMWPE wt% | | 100 | | 5 | 10 | 30 |
| XLPE wt% | | | 100 | | | |

| | | | | | | |
|---|---|---|---|---|---|---|
| CE: Comparative Example; IE: Inventive Example | | | | | | |

As a further reference, a sample of a common insulation material being an XLPE (CE3) is inserted to display the improvements over such common material.

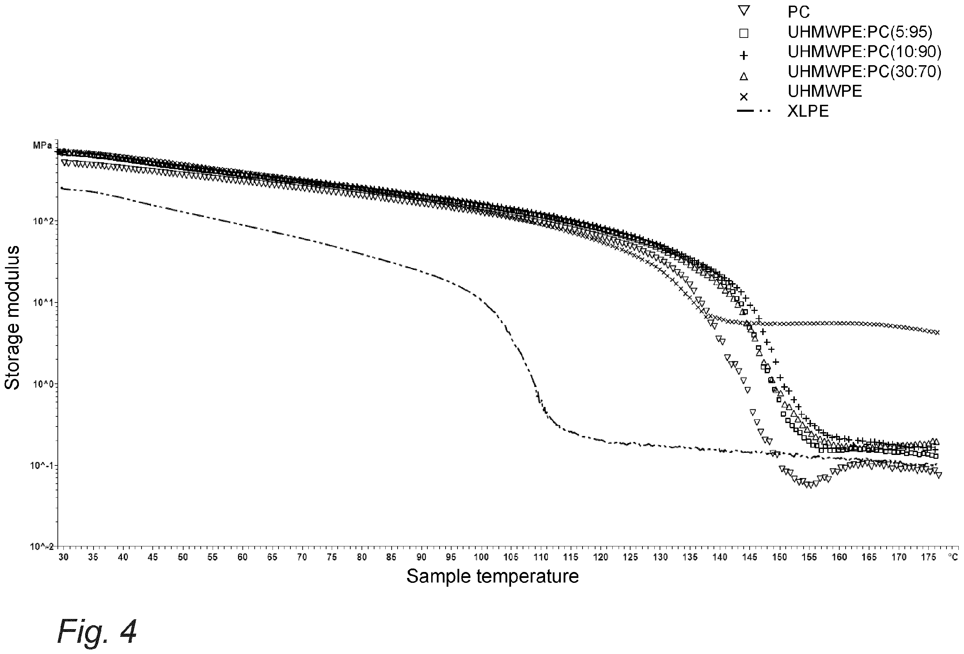

With reference to Fig. 4, the DMA Storage modulus is shown on a logarithmic scale (Log storage modulus vs sample temperature) for the samples of Table 1. As is shown in Fig. 4, IE1 & IE2 exhibit improved storage modulus at low temperatures (about 30 °C) compared with CE1 as well as CE3. At a higher temperature (about 120 °C), IE1 & IE2 exhibit improved storage modulus compared with CE2 and CE3. Notably, the storage modulus of CE3 at about 120 °C is of several orders of magnitude lower than the storage modulus of IE1 & IE2. At an even higher temperature (in a range of about 140-145 °C), the storage modulus of IE1 and IE2 are higher than CE1, CE2, CE3 as well as CE4. That is, it has been surprisingly realized that mixing of UHMWPE with PC in a ratio of the inventive examples provides a synergistic composition having an even higher storage modulus than UHMWPE or PC by themselves. This effect is most pronounced in IE2. Noteworthy is that if the content of UHMWPE is increased further to the content of CE4, the storage modulus is lower than in IE1 and IE2.

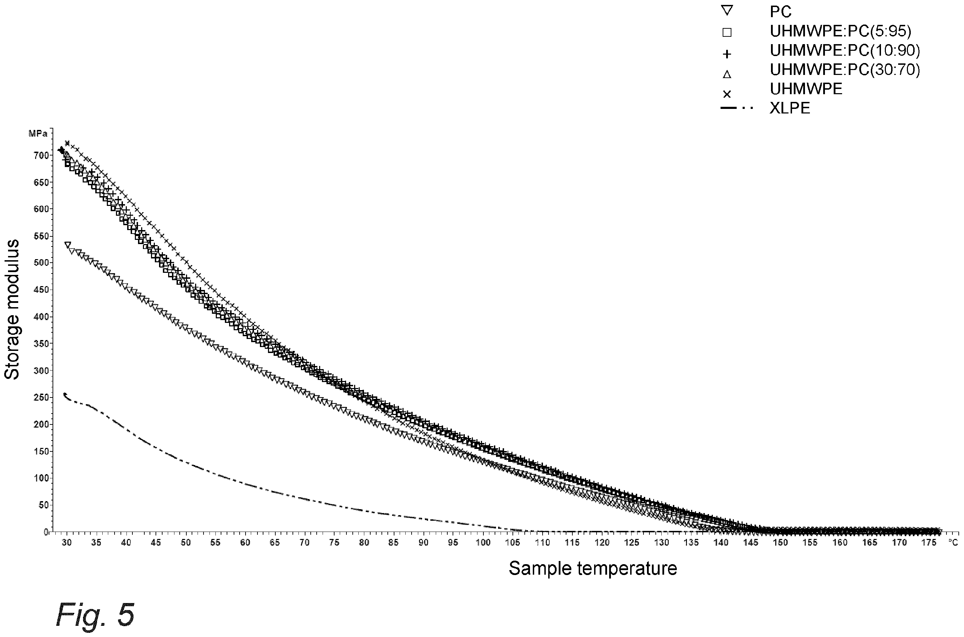

With reference to Fig. 5, the DMA Storage modulus is shown vs sample temperature for the samples of Table 1.

The obtained storage moduli for the different samples are also summarized in Table 2 below.

**Table 2. Storage moduli at different temperatures of the samples.**

| | CE1 | CE2 | CE3 | IE1 | IE2 | CE4 |
|---|---|---|---|---|---|---|
| Storage modulus (MPa) | PC | UHMWPE | XLPE | UHMWPE:PC (5:95) | UHMWPE:PC (10:90) | UHMWPE:PC (30:70) |
| About 30 °C | 600 | 720 | 250 | 700 | 700 | 700 |
| About | 75 | 60 | 0.15 | 80 | 80 | 80 |
| 120 °C | | | | | | |
| About 140-145 °C | 11 | 6 | 0.15 | 13.5 | 17 | 11 |

### Methodology

The above DMA Storage modulus were performed according to the method as described in the following.

Storage modulus was measured using Dynamic Mechanical Analysis (DMA). The samples were hot-pressed (180 °C, 200 bar) to a thickness of 1 mm and the samples were then cut to pieces with length and width dimensions of 10×8 mm. DMA was carried out using a DMA1 from METTLER TOLEDO in tensile mode . A temperature sweep was conducted using a frequency of 1 Hz and oscillation displacement of 10 µm with a temperature ramp of 30 °C to 180 °C (1 °C/min).

The storage modulus at 30 and 120 °C were used as stiffness indicators. A lower storage modulus, i.e. stiffness, at low temperature (about 30 °C) is an indicator of higher flexibility. A higher storage modulus, i.e. stiffness, at high temperature (about 120 °C), is an indicator of a higher creep-resistant behaviour and/or high temperature integrity.

The DMA storage modulus may alternative be performed by ISO 6721-1 or ASTM D4065,

Any standard or qualifications mentioned in the present application are to be based on instructions valid on the date of priority of the present application.

The inventive concept has mainly been described above with reference to a few examples. However, as is readily appreciated by a person skilled in the art, other embodiments than the ones disclosed above are equally possible within the scope of the inventive concept, as defined by the appended claims. For example, in case the power cable comprises several identical power cores to form a multi-core power cable, such as three-phase power cable, each power core may correspond to that described with reference to the power cable described in Figs. 1 and 2. Thus, each power core may at least comprise a conductor 2 and an insulation system 5 as previously described. The power cores may be stranded and surrounded by a polymeric jacket 11.

## Claims

1. A power cable (1) comprising:
- a conductor (2) extending along a centre axis (C);
- an insulation system (5) including at least a first semiconducting layer (3) surrounding the conductor (2), and an insulation layer (4) surrounding the first semiconducting layer (3);
wherein the insulation layer (4) is not crosslinked and comprises:
a) 3-25 wt% ultra-high molecular weight polyethylene, UHMWPE, having a Mw of at least 1 000 000 g/mol;
b) 50-90 wt% polypropylene, PP; and
c) 5-20 wt% styrene block copolymer
wherein the weight percentages are based on the insulation layer (4) as a whole.

2. The power cable (1) of claim 1, the insulation layer (4) comprises:
a) 3-25 wt%, such as 4-20 wt%, such as 7-19 wt%, UHMWPE;
b) 60-90 wt%, such as 70-85 wt% PP, such as 70-80 wt% PP; and
c) 5-20 wt%, such as 5-15 wt%, such as 8-15 wt%, styrene block copolymer
wherein the weight percentages are based on the insulation layer (4) as a whole.

3. The power cable (1) of claim 1 or 2, wherein the UHMWPE, PP and styrene block copolymer constitutes at least 90 wt% of the insulation layer (4), such as at least 95 wt% of the insulation layer (4), such as at least 97 wt% of the insulation layer (4), based on the weight of the insulation layer.

4. The power cable (1) according to any one of the preceding claims, wherein the styrene block copolymer is selected from the group consisting of SEBS, SEPS, SBS or SIS, or a mixture thereof.

5. The power cable (1) according to any one of the preceding claims, wherein the insulation layer (4) is an extruded, such as co-extruded, insulation layer.

6. The power cable (1) according to any one of the preceding claims being a medium voltage or high voltage power cable.

7. The power cable (1) according to any one of the preceding claims, wherein the insulation layer (4) has a storage modulus of between 650 and 750 MPa when measured at 30 °C, such as between 660 and 740 MPa, such as between 660 and 700 MPa, using the DMA Storage modulus method as defined herein.

8. The power cable (1) according to any one of the preceding claims, wherein the insulation layer (4) has a storage modulus of between 70 and 150 MPa when measured at 120 °C, such as between 75 and 120 MPa, such as between 80 and 110 MPa, using the DMA Storage modulus method as defined herein.

9. The power cable (1) according to any one of the preceding claims, wherein the insulations system (5) is not crosslinked.

10. The power cable (1) according to any one of the preceding claims, wherein the UHMWPE has a Mw of 1500 000 - 8 000 000 g/mol.

11. The power cable (1) according to any one of the preceding claims, wherein the PP is a propylene copolymer, preferably a propylene random copolymer, and/or is a homophasic polypropylene or is a heterophasic polypropylene or an isotactic polypropylene.

12. A process for producing a power cable (1) comprising the steps of:
- providing a more conductors (2);
- applying an insulation system (5) surrounding the conductor (2), wherein the insulation system includes at least a first semiconducting layer (3) and an insulation layer (4) surrounding the first semiconducting layer (3);
wherein the insulation layer (4) is not crosslinked and comprises:
a) 3-25 wt% ultra-high molecular weight polyethylene, UHMWPE, having a Mw of at least 1 000 000 g/mol;
b) 50-90 wt% polypropylene, PP; and
c) 5-20 wt% styrene block copolymer
wherein the weight percentages are based on the insulation layer (4) as a whole.

13. The process of claim 12, wherein the insulation system is applied by extrusion, such as co-extrusion.

14. The process of claim 13, wherein the polymer composition is compounded prior to the extrusion.
